# EUROPEAN PATENT APPLICATION

(11) **EP 3 826 152 A1**
(43) Date of publication of application: **26.05.2021**
(21) Application number: 19210158.2
(22) Date of filing: 19.11.2019
(51) Int. Cl.: H02K 9/19, H02K 41/02, H02K 1/20, H02K 1/32

(54) **LIQUID-COOLED CORE ASSEMBLY FOR LINEAR MOTORS AND LINEAR MOTOR COMPRISING SUCH CORE ASSEMBLY**

(71) Applicant: ETEL S.A., 2112 Môtiers (CH)
(72) Inventor: Grillon, Jean-Yves, 25300 Granges-Narboz (FR); Lefevre, Jean, 25300 La Cluse-et-Mijoux (FR); Moreno, Loïc, 25390 Guyans-Vennes (FR)
(74) Representative: P&TS SA (AG, Ltd.)

(57) **Abstract**

The invention relates to a liquid-cooled core assembly 10) for linear motor, comprising a iron-core (12) having a middle part (12a), teeth (15) extending from two opposite sides of the middle part (12a) and forming slots (16) therebetween, coils wound around the teeth, axial cooling-fluid passageways (18) extending across the middle part (12a), and cooling conduits (35) mounted inside said passageways (18). The core assembly (10) further comprises a cooling arrangement comprising a liquid supplying part (20) and a liquid collecting part (40) mounted against respective two other opposite sides of said iron-core (12). The liquid supplying and collecting parts (20, 40) are in fluid communications with said cooling conduits (30). An inlet connector (70) is in fluid communication with the liquid supplying part (20) and an outlet connector (72) is in fluid communication with the liquid collecting part (40).

## Description

### Field of the invention

The present invention concerns a liquid-cooled core assembly for linear motors, comprising an iron-core made of a single laminated stack. The invention also concerns a linear motor comprising the liquid-cooled core assembly.

### Background of the invention

Liquid-cooled core assembly as a primary part/motor for linear motors are well-known in the art and many solutions have already been proposed.

US2019131831 discloses for example a core assembly for linear motors, comprising a first core and a second core having each two opposite sides provided with slots and linear grooves respectively. The side of the first and second cores comprising the linear grooves are mounted against each other to form a plurality of parallel channels inside which are arranged portions of two cooling serpentines. The core assembly is however difficult to manufacture thereby having a negative impact on the overall cost of the linear motor.

EP1120890 discloses a core assembly for linear motors, comprising a single lamination stack having slots on both sides for the coils. The linear motor comprises a top core cover having a longitudinal groove in the center of the upper surface thereof. A U-shaped cooling pipe for passing a refrigerant is accommodated in the groove, thereby cooling only the upper portion of the lamination stack and the user interface. An ununiform cooling of the lamination stack has the disadvantage of reducing the force to footprint ratio of the linear motor.

An aim of the present invention is therefore to provide a liquid-cooled core assembly for linear motors, which is easy to manufacture and cost-effective.

Another aim of the present invention is to provide a liquid-cooled core assembly for linear motors, which has an improved force to footprint ratio over known solution.

Another aim of the present invention is to provide a liquid-cooled core assembly for linear motors, with efficient uniform cooling both inside the iron-core and at the customer interface.

A further aim of the present invention is to provide a liquid-cooled core assembly comprising a customer interface which may be easily adapted to be compliant with the configuration of a permanent magnet assembly provided by the customer.

Yet a further aim of the present invention is to provide a linear motor comprising a liquid-cooled core assembly slidably mounted on a permanent magnet assembly.

### Brief summary of the invention

These aims are achieved by a liquid-cooled core assembly for a linear motor, comprising
an iron-core having a middle part, teeth extending from two opposite sides of the middle part and forming slots therebetween, coils wound around the teeth, axial cooling-fluid passageways extending across the middle part, and cooling conduits mounted inside said passageways,
a cooling arrangement comprising a liquid supplying part and a liquid collecting part mounted against respective two other opposite sides of said iron-core, wherein both the liquid supplying and collecting parts are in fluid communication with said cooling conduits, and
an inlet connector in fluid communication with the liquid supplying part and an outlet connector in fluid communication with the liquid collecting part.

In an embodiment, the liquid supplying part comprises a liquid supplying duct and channels in fluid communication with the liquid supplying duct and sealingly connected to a first end portion of respective conduits. The liquid collecting part comprises a liquid collecting duct and channels in fluid communication with the liquid collecting duct and sealingly connected to a second end portion of said respective conduits.

In an embodiment, the first and second end portions of each conduit protrude from said respective two other opposite sides inside an end portion of a corresponding channel of respective liquid supplying and collecting parts.

In an embodiment, the end portion of each channel of the liquid supplying and collecting parts comprises a sealing receiving portion inside which a sealing, preferably an O-ring, is mounted around said first and second end portions of each conduit.

In an embodiment, the iron-core further comprises axial through-holes extending across the middle part in an alternate fashion with the cooling-fluid passageways.

In an embodiment, the central axis of said passageways and said through-holes are aligned within a plane crossing the middle part of the iron-core and which is substantially equidistant between said two opposite sides of the middle part.

In an embodiment, each of the axial cooling-fluid passageways and through-holes is aligned with two slots located on respectively one and the other of said two opposite sides of the middle part.

In an embodiment, each of the axial cooling-fluid passageways and through-holes is aligned with two slots located on respectively one and the other of said two opposite sides of the middle part.

In an embodiment, the liquid supplying and collecting parts are assembled against the iron-core by means of screws.

In an embodiment, the liquid supplying part comprises threaded bores while the liquid collecting part comprises through-holes. The screws extend along respective through-holes of the liquid collecting part and through-holes of the iron-core. The end portion of the screws are screwed into the corresponding threaded bore of the liquid supplying part.

In an embodiment, screw sleeves are arranged around sections of the screws which cross the liquid collecting duct of the liquid collecting part to seal said sections from the liquid collecting duct.

In an embodiment, each of the liquid supplying and collecting parts has a T-shaped cross-section which is constant along the entire length of said liquid supplying and collecting parts to form a compartment with respective side of said two other opposite sides of the iron-core for receiving portions of the coils.

In an embodiment, an inlet tube is mounted inside the liquid supplying duct. The inlet tube is in fluid communication with the inlet connector and extends along a portion of the liquid supplying duct such that an end portion of the inlet tube is located between a third and two thirds of the length of the supplying duct. The end portion of the inlet tube is preferably located in the middle of the length of the supplying duct.

In an embodiment, the liquid-cooled core assembly comprises a first and a second mounting part assembled against respective first and second lateral sides of the iron-core and of the liquid supplying and collecting parts. The inlet and outlet connectors are mounted into one of said first and second mounting parts.

In an embodiment, the inlet connector is located as close as possible to the customer interface to ensure that the interface remains at ambient temperature.

In an embodiment, cable glands, for electrical connection of the coils, are mounted on the mounting part comprising the inlet and outlet connectors.

Another aspect of the invention relates to a linear motor comprising the liquid-cooled core assembly as described above slidably mounted on a permanent magnet assembly.

### Brief description of the drawings

The invention will be better understood with the aid of the description of several embodiments given by way of examples and illustrated by the figures, in which:
- Figure 1 shows a perspective exploded view of the iron-core for linear motors, made of a single laminated stack and cooling tubes adapted to be fitted inside axial cooling fluid passageways of the iron-core according to an embodiment;
- Figure 2 shows a similar view of Figure 1 with cooling tubes mounted inside their respective cooling fluid passageways;
- Figure 3 shows a top view of the iron core of Figure 2 without the cooling tubes;
- Figure 4 shows a similar view of Figure 3 according to another embodiment;
- Figure 5 shows a top perspective view of the liquid supplying part according to an embodiment;
- Figure 6 shows a bottom perspective view of the liquid supplying part of Figure 5;
- Figure 7 is a cross-section view of the liquid supplying part or of the liquid collecting part;
- Figure 8 shows an enlarged cross-section view of an end portion of a cooling tube sealingly connected to a corresponding channel of the liquid supplying part;
- Figure 9 shows an enlarged cross-section view of an end portion of a cooling tube sealingly connected to a corresponding channel of the liquid collecting part;
- Figure 10 shows a partial perspective view of the liquid-cooled core assembly;
- Figure 11 shows a cross-section view of the liquid-cooled core assembly according to an embodiment,
- Figure 12 shows a partial cross-section view of the liquid-cooled core assembly according to another embodiment, and
- Figures 13a, 13b and 13c show a top view of the liquid-cooled core assembly with different configurations of the connecting part of the customer interface for connection to a permanent magnet assembly.

### Detailed description of several embodiments of the invention

Within the context of the present invention, the liquid-cooled core assembly must be understood as the motor, the moving part, the slider or the glider, which is configured to be slidably mounted on a permanent magnet assembly of a linear motor. In addition, the term "customer interface" must be understood within the context of the present invention as the portion of the core assembly to be slidably mounted on the permanent magnet assembly.

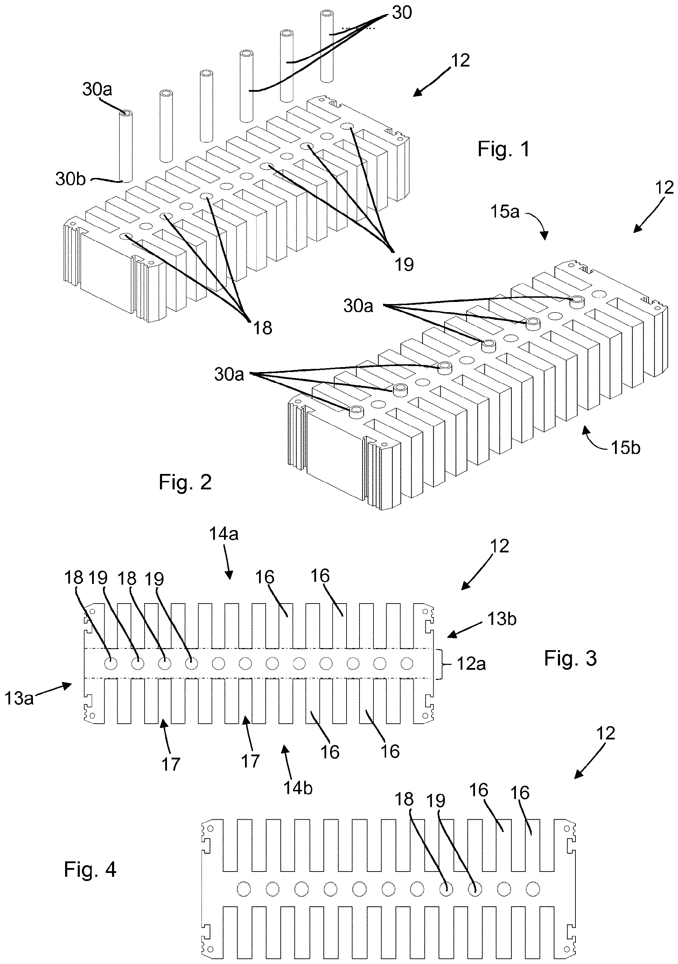

With reference to Figures 1-4 and 10, the liquid-cooled core assembly 10 comprises an iron-core 12 made of a laminated stack. The magnetic iron-core 12 comprise a middle part 12a extending between two lateral sides 13a, 13b of the iron-core 12. Teeth 16 extend from two opposite sides of the middle part 12a along two longitudinal sides 14a, 14b of the iron-core 12. Slots 17 formed between the teeth 16 on one side of the middle part 12a are aligned with the slots 17 formed between the teeth 16 on the opposite side of the middle part 12a.

Axial cooling-fluid passageways 18 and through-holes 19 are drilled in the iron-core 12. Through-holes 19 extend across the middle part 12a of the iron-core 12 in an alternate fashion with axial cooling-fluid passageways 18. The central axis of the passageways 18 and through-holes 19 are preferably aligned within a plane crossing the middle part 12a of the iron-core 12 along its longitudinal direction and which is substantially equidistant between the two opposite sides of the middle part 12a from which the teeth 16 extend.

Each of the cooling-fluid passageways 18 and through-holes 19 is aligned with two corresponding slots 17 located on respectively one and the other of said two opposite sides of the middle part 12a. The passageways and through-holes 18, 19 may also be aligned with two corresponding opposed teeth 16 according to the embodiment shown in Figure 4 although this configuration is not optimal for attraction force cancellation because it increases the magnetic stray flux circulating between adjacent teeth 16.

As particularly illustrated in Figures 1 and 2, cooling conduits, preferably in the form of tubes 30, are inserted in the cooling-fluid passageways 18. Using tubes ensures that no fluid leakage occurs between the layers of lamination, which could cause corrosion. The iron-core 12 is heated before insertion of the cooling tubes 30 in order to increase the diameter of the passageways 18. This ensures very tight mechanical tolerances and an optimal heat transfer between the laminated stack and the cooling tubes 30 when the diameters of the passageways 18 return to their initial size at ambient temperature. Each cooling tube 30 comprises a first and a second end portion 30a, 30b which protrude respectively from a top side 15a and a bottom side 15b of the middle part 12a of the iron-core 12.

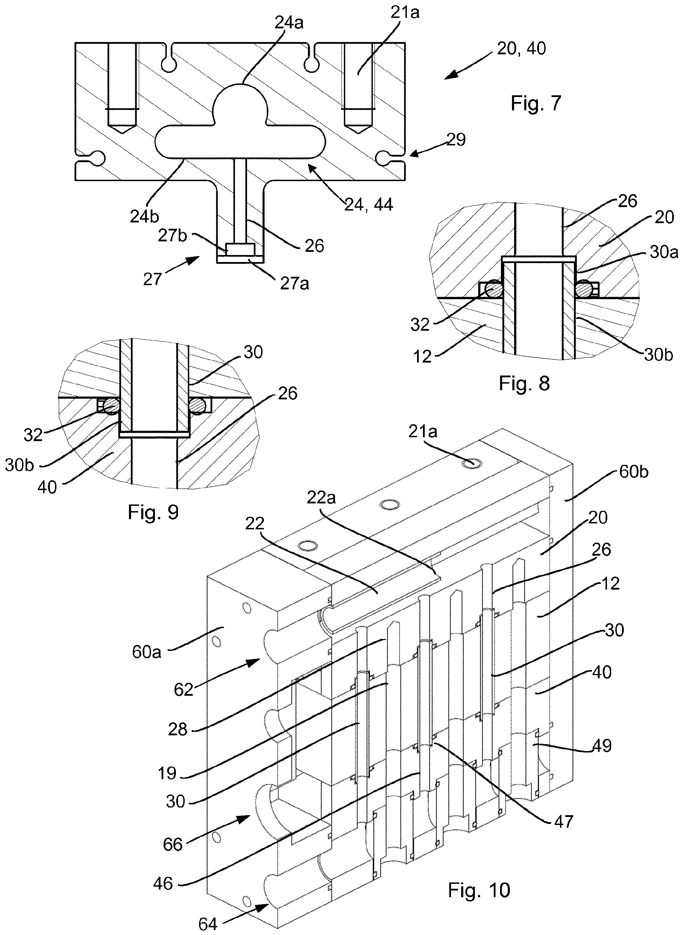

With reference to Figure 10, the liquid-cooled core assembly 10 comprises a cooling arrangement comprising a liquid supplying part 20 and a liquid collecting part 40 mounted against respective top and bottom sides 15a, 15b of the middle part 12a of the iron-core 12. Both liquid supplying and collecting parts 20, 40 are manufactured as aluminium extruded parts, cut to the length of the motor.

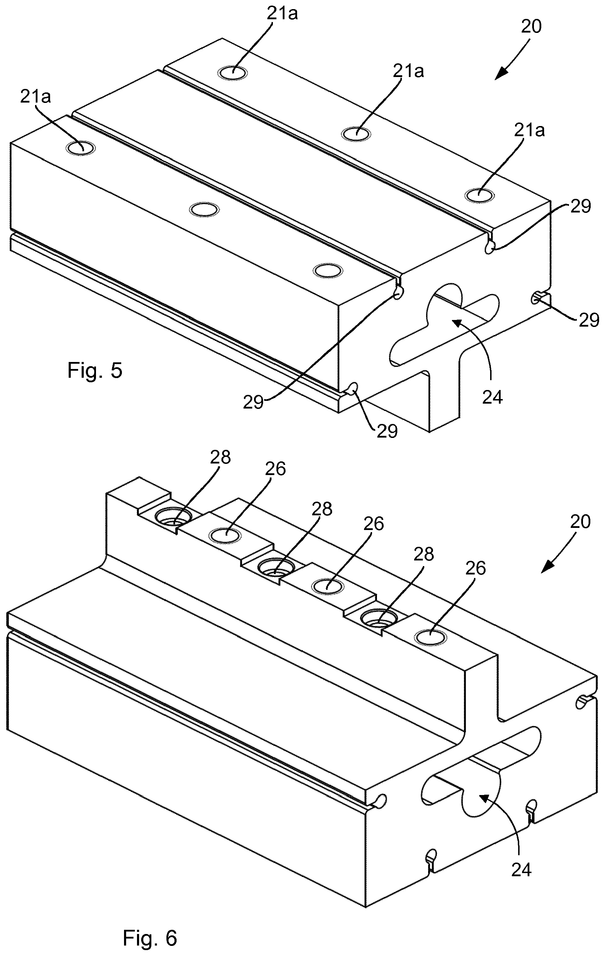

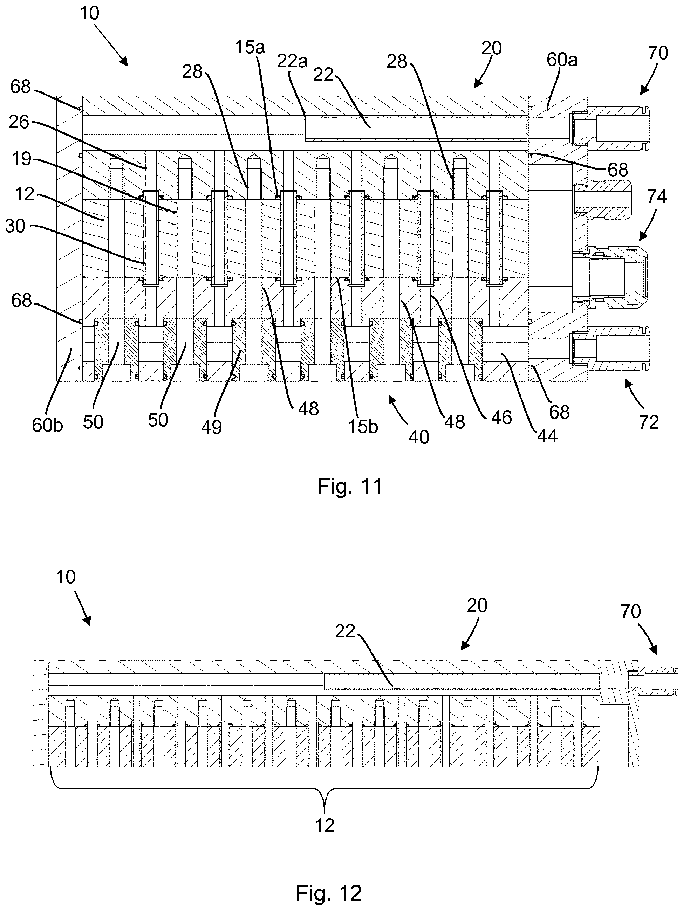

With reference to Figures 5, 6 and 7, each of the liquid supplying and collecting parts 20, 40 comprises respectively a liquid supplying duct 24 and a liquid collecting duct 44 (Figures 7 and 11) extending through respective supplying and collecting parts 20, 40 along their entire length. The cross-section of the liquid supplying and collecting duct 24, 44 is preferably constant along their entire length.

The liquid supplying duct 24 comprises for example a partial upper cylindrical portion 24a and a lower portion 24b extending across the width of the liquid supplying part 40. The shape of the lower portion 24b has the advantage to provide a cooling fluid reservoir which reduces as much as possible the pressure losses in the liquid supplying duct 24 due to the fluid flow. The shape of the liquid collecting duct 44 is preferably identical to the shape of the liquid supplying duct 24 in order to simplify the manufacturing operations of the liquid supplying and collecting parts 20, 40 by using the same extrusion die for both.

Each of the liquid supplying and collecting parts 20, 40 comprises channels 26, 46 in fluid communication with respective liquid supplying and collecting duct 24, 44. As shown in particular in Figure 10, the end portion 27 of each channel 26 of the liquid supplying part 20 is sealingly connected to the first end portion 30a of respective cooling tube 30 while the end portion 27 of each channel 46 of the liquid collecting part 40 is sealingly connected to the second end portion 30b of respective cooling tube 30.

More particularly, referring to Figures 7 and 8, the end portion 27 of each channel 26 of the liquid supplying part 20 comprises a sealing receiving portion 27a and a tube end receiving portion 27b. The sealing receiving portion 27a can either be cylindrical, or preferably a rectangular machined surface as shown in Figure 6. Similarly, the end portion 47 of each channel 46 of the liquid collecting part 20, as shown in Figure 10, comprises a sealing receiving portion and a tube end receiving portion as shown in Figure 9.

As best shown in Figures 11 and 12, an inlet tube 22 is mounted inside the partial upper cylindrical portion 24a of the liquid supplying duct 24. The inlet tube 22 is in fluid communication with an inlet connector 70 and extends along a portion of the liquid supplying duct 24 such that an end portion 22a of the inlet tube 22 is located between a third and two thirds of the entire length of the supplying duct 24. The end portion 22a of the inlet tube 22 is preferably located around the middle of the entire length of the supplying duct 24. The length of the inlet tube 22 is adapted to the size of the liquid-cooled core assembly 10 as shown in Figure 12.

The inlet tube 22 ensures that the cooling liquid runs into the lower portion 24b of the liquid supplying duct 24 in the middle of the length thereof which extends in the longwise direction of the liquid-cooled core assembly 10 of the linear motor, thereby avoiding pressure and temperature gradient inside the core assembly.

With reference to Figure 11, the liquid supplying and collecting part 20, 40 are assembled against respective top and bottom sides 15a, 15b of the iron-core 12 by means of screws 50. In that respect, the liquid supplying part 20 comprises threaded bores 28 while the liquid collecting part 40 comprises through-holes 48.

The screws 50 extend along respective through-holes 48 of the liquid collecting part 40 and through-holes 19 of the iron-core 12 while the end portion of the screws 50 are screwed into the corresponding threaded bore 28 of the liquid supplying part 20. Screw sleeves 49 are arranged around a section of the screws 50 which crosses the liquid collecting duct 44 of the liquid collecting part 40 in order to seal the screws 50 from the liquid collecting part.

Each of the liquid supplying and collecting parts 20, 40 has a T-shaped cross-section to form a compartment with respective side of said two other opposite sides of the iron-core 12 for receiving the end turns of the coils (not shown).

Referring to Figure 10, a first and a second mounting part 60a, 60b are assembled against respective first and second lateral sides of the iron-core 12 and of the liquid supplying and collecting part 20, 40. Each of the first and second mounting part 60a, 60b is connected to respective lateral sides of the liquid supplying and collecting part 20, 40 by means of self-tapping screws adjusted in the corresponding tubular portion of longitudinal slots 29 provided on the liquid supplying and collecting part 20, 40 as shown in Figures 5 to 7.

One mounting part 60a comprises connector receiving cylindrical or threaded portions 62, 64 into which are mounted inlet and outlet connectors 70, 72 of the cooling arrangement as shown in Figure 11. The inlet connector 70 is located as close as possible to the customer interface 21 to ensure that the interface remains at ambient temperature. Additional cylindrical or threaded portions 66 are provided on the mounting part 60a into which cable glands 74 are mounted for electrical connection of the coils (not shown) wound around the teeth 16 of the iron-core 12.

As shown for example in Figure 11, sealing grooves 68 are arranged on the first and second mounting parts 60a, 60b around both end portions of the liquid supplying and collecting ducts 24, 44 of respective supplying and collecting parts 20, 40 to avoid any leakage.

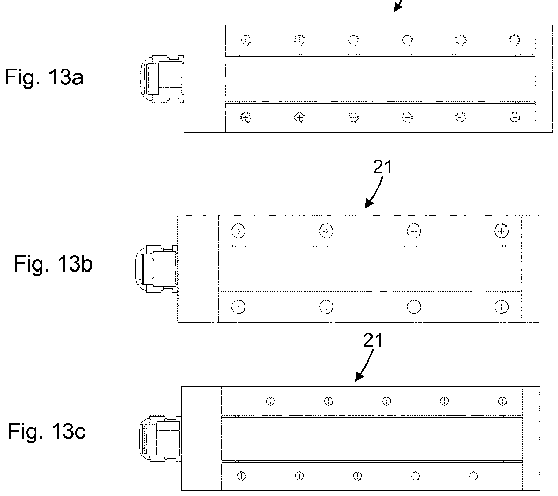

As illustrated for example in Figure 5, the customer interface 21 comprises threaded bores 21a for assembling the liquid-cooled core assembly 10 to a permanent magnet assembly of the linear motor. The customer interface may easily be adapted to comply with the configuration of the customer's permanent magnet assembly via minor modifications. For example, the pitch, the size and/or the number of threaded bores 21a on the customer interface 21 may be changed as shown in Figures 13a, 13b and 13c.

### Reference list

Liquid-cooled core assembly 10
Magnetic core 12
   Middle part 12a
   Lateral sides 13a, 13b
   longitudinal sides 14a, 14b
   Top and bottom sides 15a, 15b
   teeth 16
   Slots 17
   Cooling-fluid passagways18
   Through-holes 19
Cooling arrangement
   Liquid supplying part 20
      Customer interface 21
         Threaded bores 21a
      T-shaped cross-section
         Inlet tube 22
         End portion 22a
      Liquid supplying duct 24
         Partial cylindrical portion 24a
         Lower portion 24b
      Channels 26
         End portion 27
         Sealing receiving portion 27a
         Tube end receiving portion 27b
      Threaded bores 28
      Longitudinal slots 29
         Tubular portion
   Cooling conduits
      Cooling tubes 30
      End portions 30a,30b
   Sealings
      O-ring 32
   Liquid collecting part 40
      T-shaped cross-section
      Liquid collecting duct 44
      Channels 46
         End portion 47
      Through holes 48
      Screw sleeves 49
Screws 50
First and second mounting parts 60a,60b
   Connector receiving portions 62, 64
   Cable glands receiving portions 66
   Sealing rings 68
Inlet connector 70
Outlet connector 72
Cable glands 74

## Claims

1. A liquid-cooled core assembly (10) for a linear motor, comprising
an iron-core (12) having a middle part (12a), teeth (16) extending from two opposite sides of the middle part (12a) and forming slots (17) therebetween, coils wound around the teeth (16), axial cooling-fluid passageways (18) extending across the middle part (12a), and cooling conduits (30) arranged inside said passageways (18),
a cooling arrangement comprising a liquid supplying part (20) and a liquid collecting part (40) mounted against respective two other opposite sides of said iron-core (12), wherein the liquid supplying and collecting parts (20, 40) are in fluid communication with said cooling conduits (30), and
an inlet connector (70) in fluid communication with the liquid supplying part (20) and an outlet connector (72) in fluid communication with the liquid collecting part (40).

2. The liquid-cooled core assembly (10) according to claim 1, wherein the liquid supplying part (20) comprises a liquid supplying duct (24) and channels (26) in fluid communication with the liquid supplying duct (24) and sealingly connected to a first end portion (30a) of respective conduits (30), and wherein the liquid collecting part (40) comprises a liquid collecting duct (44) and channels (46) in fluid communication with the liquid collecting duct (44) and sealingly connected to a second end portion (30b) of said respective conduits (30).

3. The liquid-cooled core assembly (10) according to claim 2, wherein the first and second end portions (30a, 30b) of each conduit (30) protrude from said respective two other opposite sides inside an end portion (27, 47) of a corresponding channel (26, 46) of respective liquid supplying and collecting parts (20, 40).

4. The liquid-cooled core assembly (10) according to claim 3, wherein said end portion (27, 47) comprises a sealing receiving portion (27a, 47a) inside which a sealing (32), preferably an O-ring, is mounted around said first and second end portions (30a, 30b) of each conduit (30).

5. The liquid-cooled core assembly (10) according to any of claims 2 to 4, wherein the iron-core (12) further comprises axial through-holes (19) extending across the middle part (12a) in an alternate fashion with the cooling-fluid passageways (18).

6. The liquid-cooled core assembly (10) according to claim 5, wherein the central axis of said passageways (18) and said through-holes (19) are aligned within a plane crossing the middle part (12a) of the iron-core and which is substantially equidistant between said two opposite sides of the middle part (12a).

7. The liquid-cooled core assembly (10) according to claim 5 or 6, wherein each of said passageways (18) and said through-holes (19) is aligned with two slots (16) located on respectively one and the other of said two opposite sides of the middle part (12a).

8. The liquid-cooled core assembly (10) according to any of claims 5 to 7, wherein said liquid supplying and collecting parts (20, 40) are assembled against the iron-core (12) by means of screws (50).

9. The liquid-cooled core assembly (10) according to claim 8, wherein the liquid supplying part (20) comprises threaded bores (28) while the liquid collecting part (40) comprises through-holes (48), wherein the screws (50) extend along respective through-holes (48) of the liquid collecting part (40) and through-holes (19) of the iron-core (12), the end portion of the screws (50) being screwed into the corresponding threaded bore (28) of the liquid supplying part (20).

10. The liquid-cooled core assembly (10) according to claim 9, wherein screw sleeves (49) are arranged around sections of the screws (50) which cross the liquid collecting duct (24) of the liquid collecting part (40) to seal said sections from the liquid collecting duct.

11. The liquid-cooled core assembly (10) according to any preceding claim, wherein each of said liquid supplying and collecting parts (20, 40) has a T-shaped cross-section to form a compartment with respective side of said two other opposite sides of the iron-core (12) for receiving portions of the coils.

12. The liquid-cooled core assembly (10) according to any preceding claim, wherein an inlet tube (22) is mounted inside the liquid supplying duct (24), the inlet tube (22) being in fluid communication with the inlet connector (70) and extends along a portion of the liquid supplying duct (24) such that an end portion (22a) of the inlet tube (22) is located between a third and two thirds of the length of the supplying duct (24), said end portion (22a) being preferably located in the middle of the length of said supplying duct.

13. The liquid-cooled core assembly (10) according to any preceding claim, comprising a first and a second mounting part (60a, 60b) assembled against respective first and second lateral sides of the iron-core (12) and of the liquid supplying and collecting parts (20, 40), wherein the inlet and outlet connectors (70, 72) are mounted into one of said first and second mounting parts (60a, 60b).

14. The liquid-cooled core assembly (10) according to claim 13, wherein cable glands (74), for electrical connection of the coils, are mounted on the mounting part (60a) comprising the inlet and outlet connectors (70, 72).

15. A linear motor comprising the liquid-cooled core assembly (10) according to any preceding claim, slidably mounted on a permanent magnetic assembly.
